# EUROPÄISCHE PATENTSCHRIFT

(11) **EP 3 849 878 B1**
(45) Veröffentlichungstag und Bekanntmachung des Hinweises auf die Patenterteilung: **27.07.2022**
(21) Anmeldenummer: 19753350.8
(22) Anmeldetag: 13.08.2019
(51) Int. Cl.: B62D 15/02, B60W 30/06

(54) **QUERLENKVERFAHREN UND QUERLENKVORRICHTUNG FÜR DAS BEWEGEN EINES FAHRZEUGS IN EINE ZIELPOSITION, UND FAHRZEUG DAFÜR**
TRANSVERSE STEERING METHOD AND TRANSVERSE STEERING DEVICE FOR MOVING A VEHICLE INTO A TARGET POSITION, AND VEHICLE FOR THIS PURPOSE
PROCÉDÉ DE DIRECTION TRANSVERSALE ET DISPOSITIF DE DIRECTION TRANSVERSALE POUR LE DÉPLACEMENT D'UN VÉHICULE DANS UNE POSITION CIBLE, ET VÉHICULE APPROPRIÉ

(30) Priorität: 10.09.2018 DE 102018122055
(43) Veröffentlichungstag der Anmeldung: 21.07.2021
(73) Patentinhaber: ZF CV Systems Europe BV, 1170 Brussels (BE)
(72) Erfinder: WULF, Oliver, 31535 Neustadt (DE)
(74) Vertreter: Rabe, Dirk-Heinrich
(86) Internationale Anmeldenummer: PCT/EP2019/071662
(87) Internationale Veröffentlichungsnummer: WO 2020/052887

(56) Entgegenhaltungen:
- CN-B- 104 512 408
- DE-A1-102010 004 920
- US-A1- 2004 267 423
- US-A1- 2016 378 118

## Beschreibung

Die Erfindung betrifft ein Querlenkverfahren und eine Querlenkvorrichtung für das Bewegen eines angetriebenen Fahrzeugs an eine einen Zielort und eine Zielorientierung umfassende Zielposition, sowie ein dafür eingerichtetes Fahrzeug.

Die US20040267423A1 offenbart einen gattungsgemäße Fahrzeugfahrunterstüzungsvorrichtung zum Führen eines Fahrzeugs zu einer Zielposition. Ein Basispfad, der den Ablenkwinkel Theta auf 0 ändert, wird bestimmt und einer Ähnlichkeits-transformation unterzogen. Auf der Grundlage des ähnlichkeitstransformierten Pfads wird eine Pfadfaktorisierung beim Übergang vom anfänglichen Lenkwinkel eingestellt. Dann wird eine Korrektur vorgenommen, so dass die Fläche in dem Laufstrecken-Krümmungs-Graphen bezüglich dieses Weges gleich einer entsprechenden Fläche bezüglich des Basiswegs wird, wodurch ein korrigierter Weg eingestellt wird. Der korrigierte Weg wird ähnlichkeitstransformiert und dann entsprechend dem Übergang vom anfänglichen Lenkwinkel erneut korrigiert. Somit wird ein endgültiger Zielpfad erhalten. Die CN104512408B beschreibt eine Parkhilfsvorrichtung, die eine Parkhilfs-ECU aufweist. DieParkhilfs-ECU stellt eine angestrebte Parkposition eines Fahrzeugs ein und übt eine Parkhilfssteuerung aus, um das Fahrzeug zu der angestrebten Parkposition zu führen. Die Parkhilfs-ECU verhindert basierend auf der Wirkung einer Parkbremse des Fahrzeugs, die als ein mechanischer Hindernisfaktor dient, das Führen des Fahrzeugs, so dass die Parkhilfssteuerung nicht ausgeführt wird.

Aus der DE 10 2016 011 324 A1 ist ein Verfahren zur Steuerung eines Zugfahrzeugs bei dessen Heranfahren und Ankuppeln an ein Anhängerfahrzeug bekannt. Der rückwärtige Umfeldbereich hinter dem Zugfahrzeug wird, zum Beispiel mit einer Kamera, erfasst; aus den erfassten Daten werden eine Versatzstrecke und ein Versatzwinkel zwischen dem Zugfahrzeug und dem Anhängerfahrzeug ausgewertet; mindestens eine Fahrtrajektorie mittels derer das Zugfahrzeug autonom zu einem Ankuppelort fahrbar ist wird berechnet, und das Zugfahrzeug wird gemäß der Fahrtrajektorie autonom herangefahren und angekuppelt.

Bei dem Verfahren des Standes der Technik kann als nachteilig angesehen werden, dass eine zu Beginn des Bewegungsvorgangs berechnete Fahrtrajektorie deutlich fehlerhaft sein kann, weil typischerweise die Startposition dann nur ungenau bekannt ist. Insbesondere Fehler einer gemessenen Startorientierung führen insbesondere bei großem zu durchfahrenden Abstand zu einem großen seitlichen Versatz.

Ebenfalls als nachteilig kann angesehen werden, dass Messwerte der Positionsmessung typischerweise verrauscht sind, mit anderen Worten Fehleranteile enthalten.

Der Erfindung liegt die Aufgabe zugrunde, Querlenkverfahren und Querlenkvorrichtungen zum Bewegen eines Fahrzeugs in eine Zielposition bereitzustellen, bei denen diese Nachteile vermieden werden. Ebenso sollen Fahrzeuge bereitgestellt werden, die eingerichtet sind, diese Querlenkverfahren durchzuführen.

Diese Aufgabe wird von einem Querlenkverfahren gemäß Anspruch 1, von einer Querlenkvorrichtung gemäß Anspruch 3 und von einem Fahrzeug gemäß Anspruch 5 gelöst.

In einer weiteren vorteilhaften Weiterbildung umfassen die Querlenkverfahren gemäß der Erfindung, dass das Filtern der Orts- und Orientierungsdaten als Kalmanfilterung ausgebildet ist, bei der die Orts- und Orientierungsdaten unter Berücksichtigung von am Fahrzeug gemessenen Fahrteigenschaften, Gütewerten und einem Bewegungsmodell des Fahrzeugs zu den Aktuellwerten aufbereitet werden.

In einer weiteren vorteilhaften Weiterbildung umfassen die Querlenkvorrichtungen gemäß der Erfindung, dass das Messwertefilter als Kalmanfilter ausgebildet ist, so eingerichtet, dass die Orts- und Orientierungsdaten unter Berücksichtigung von am Fahrzeug gemessenen Fahrteigenschaften, Gütewerten und einem Bewegungsmodell des Fahrzeugs zu den Aktuellwerten aufbereitet werden.

Ein Fahrzeug gemäß der Erfindung, insbesondere ein angetriebenes Zugfahrzeug ist eingerichtet, ein Querlenkverfahren gemäß der Erfindung durchzuführen, und/oder weist eine Querlenkvorrichtung gemäß der Erfindung auf.

Vorteilhafte Ausführungsformen der Erfindung ergeben sich aus den Ansprüchen sowie aus den anhand der Zeichnungen näher erläuterten Ausführungsbeispielen. In den Zeichnungen zeigen:
- Fig. 1: schematisch in Seitenansicht einen Anwendungsfall, wo die Zielposition eine Ankuppelposition ist,
- Fig. 2: schematisch in Draufsicht die hier verwendeten geometrischen Beziehungen, Definitionen und Größen am Beispiel eines Sattelschleppers vor einem Auflieger,
- Fig. 3: ein Blockdiagramm zur Erläuterung eines ersten Querlenkverfahrens gemäß der Erfindung,
- Fig. 4: ein Blockdiagramm zur Erläuterung eines zweiten Querlenkverfahrens gemäß der Erfindung,

- Fig. 5: ein Blockdiagramm zur Erläuterung eines dritten Querlenkverfahrens gemäß der Erfindung, und
- Fig. 6: ein Blockdiagramm zur Erläuterung eines vierten Querlenkverfahrens gemäß der Erfindung.

Position, wie bei Zielposition, wird hier verstanden als jeweils eine Ortsangabe und eine Orientierungsangabe umfassend. Die Ortsangabe kann zum Beispiel durch Koordinaten in einem zwei- oder dreidimensionalen Koordinatensystem, absolut oder relativ, erfolgen. Die Orientierungsangabe kann durch eine zwei- oder dreidimensionale Winkelangabe zusammen mit einer Vereinbarung über den Bezugspunkt und den Bezugswinkel erfolgen.

Querlenkung bezeichnet hier eine Einwirkung auf die Winkel der Räder der Lenkachse des Fahrzeugs. Bei Fahrzeugen mit mehreren gelenkten Achsen kann dies auch eine angemessene Einwirkung auf andere Achsen als die Hauptlenkachse umfassen.

Die Zielposition kann eine Ankuppelposition sein, d.h. eine Position im Sinne von Ort und Orientierung, an der das Fahrzeug an ein Anhänger- oder Aufliegerfahrzeug angekuppelt werden kann.

Die Zielposition kann auch eine Beladungsposition sein, d.h. eine Position an einer Laderampe die es ermöglicht, das Fahrzeug zu be- oder entladen. Die x-Achse des bezüglich der Zielposition ortsfesten Koordinatensystems legt man hier bevorzugt in die Richtung, in der man an die Beladungsposition heranfahren muss, zum Beispiel rechtwinklig zu einer Kante einer Laderampe.

Die Zielposition kann auch eine Aufladeposition sein, d.h. eine Position an der dem Fahrzeug durch Anschluss an eine Versorgungseinrichtung Betriebsmittel wie zum Beispiel Treibstoff, Batterieladung oder Hydraulikflüssigkeit zugeführt werden können. Die x-Achse des bezüglich der Zielposition ortsfesten Koordinatensystems legt man hier bevorzugt in die Richtung, in der man an die Aufladeposition heranfahren muss, zum Beispiel in geeignetem Abstand längs neben die Versorgungseinrichtung.

Die Zielposition kann auch eine Parkposition in einem für Teilautomatisierung vorbereiteten Fahrzeugabstellplatz sein. Die x-Achse des bezüglich der Zielposition ortsfesten Koordinatensystems legt man hier bevorzugt in die Richtung, in der man in die Parkposition einfahren muss.

Der Sensor des Fahrzeugs kann zum Beispiel ein Laserscanner oder ein LIDAR, eine Standbildkamera, oder eine Videokamera sein.

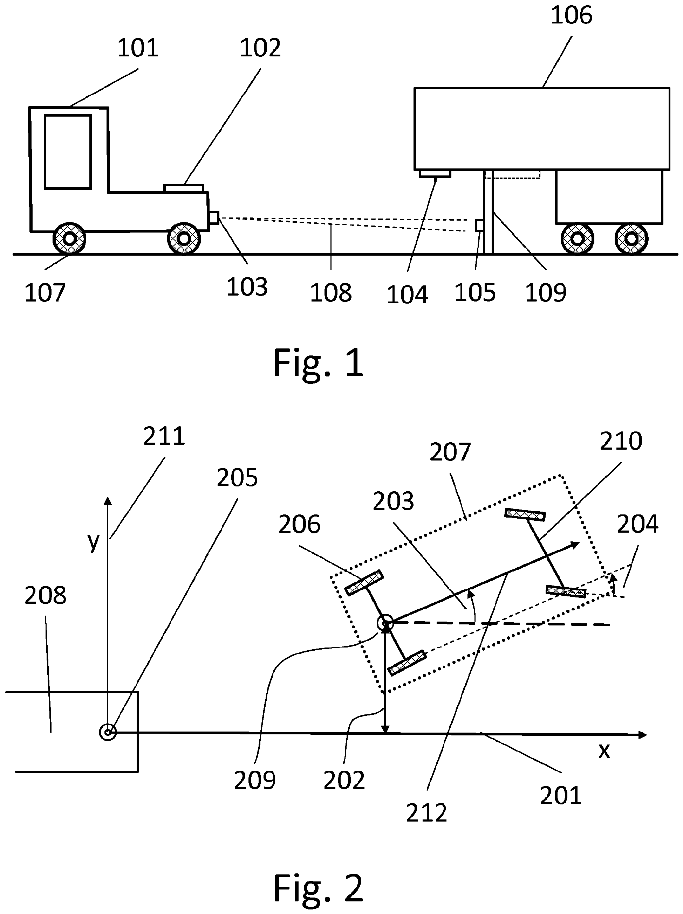

Fig. 1 zeigt schematisch in Seitenansicht einen Anwendungsfall, wo die Zielposition eine Ankuppelposition ist. Das Fahrzeug ist hier ein Sattelschlepper 101 und umfasst eine aktive Lenkung 107, zwei waagerecht quer zur Längsachse beabstandete Sensoren 103 und eine Sattelplatte 102. Der Sattelschlepper 101 steht mit Abstand vor einem Auflieger 106, der einen Sattelzapfen 104 sowie einklappbare Stützen 109 umfasst. Ein Erreichen der Zielposition ist hier dann gegeben, wenn die Sattelplatte 102 in Draufsicht mittig unter dem Sattelzapfen 104 positioniert wurde. Die Stützen 109 umfassen Reflektoren 105, die so beschaffen und angebracht sind, dass sie durch Messung 108 von den Sensoren 103 hinsichtlich ihrer Richtung und ihres Abstandes sensiert werden können.

Fig. 2 zeigt schematisch in Draufsicht die hier verwendeten geometrischen Beziehungen, Definitionen und Größen am Beispiel eines Sattelschleppers 207 als Fahrzeug vor einem teilweise angedeuteten unbewegten Auflieger 208 mit einem Sattelzapfen 205. Im als Zielort angenommenen Sattelzapfen 205 liegt der Ursprung eines ortsfesten rechtwinkligen Koordinatensystems aus x-Richtung 201 und y-Richtung 211. Die x-Richtung entspricht dabei der Längsachse des Aufliegers 208. Der Sattelschlepper 207 umfasst eine ungelenkte Hinterachse 206 und eine gelenkte Vorderachse 210 und hat einen Bezugspunkt 209, eine Position, eine Orientierung, einen Lenkwinkel beta 204 und eine Längsachse 212. Der Bezugspunkt 209 für die Beschreibung des Sattelschleppers 207 ist die Mitte seiner Sattelplatte. Die Position des Sattelschleppers 207 ist definiert durch die x-Koordinate und die y-Koordinate dieses Bezugspunkts 209. Speziell die y-Koordinate des Bezugspunkts 209 wird auch als Querversatz 202 bezeichnet. Die Orientierung des Sattelschleppers 207 ist definiert als der Winkel alpha 203, den die Längsachse 212 des Sattelschleppers 207 mit der x-Richtung 201 einschließt. Der Lenkwinkel beta 204 des Sattelschleppers 207 ist definiert als der Winkel, den die Räder der Vorderachse 210 mit einer Parallele zu der Längsachse 212 des Sattelschleppers 207 einschließen.

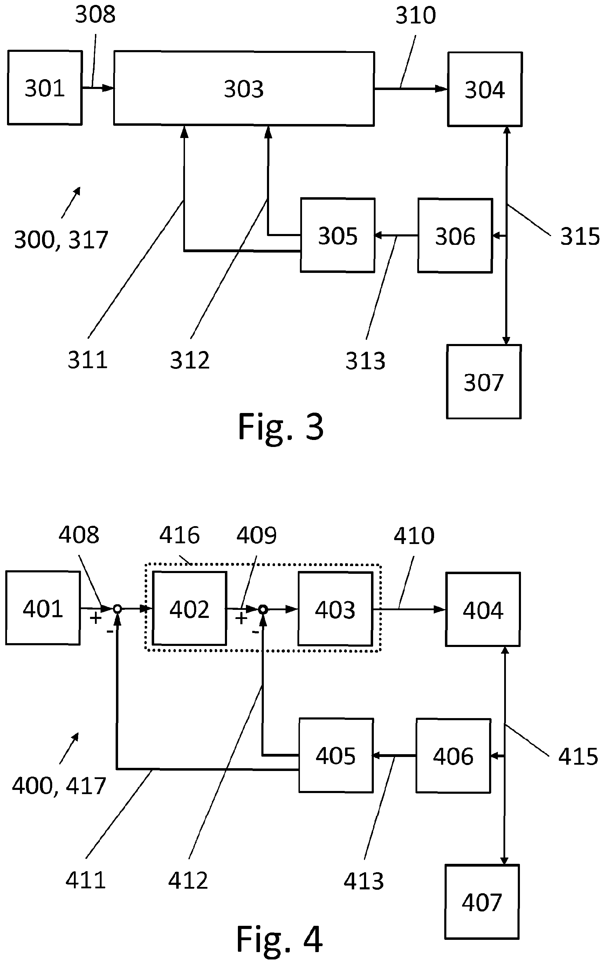

Fig. 3 zeigt ein Blockdiagramm zur Erläuterung eines ersten Querlenkverfahrens 300 und einer ersten Querlenkvorrichtung 317 gemäß der Erfindung. Am Querlenkverfahren 300 beteiligt sind eine Sollversatzvorgabe 301, ein auf ein Fahrzeug 304 einwirkender Regler 303, eine Messvorrichtung 306, und ein Messwertefilter 305. Der Regler 303 erhält von der Sollversatzvorgabe 301 einen Soll-Querversatz oder Sollversatz 308, sowie vom Messwertefilter 305 Werte für einen aktuellen Querversatz 311 und eine aktuelle Orientierung 312 des Fahrzeugs 304. Aus diesen Eingangsdaten leitet der Regler 303 einen Solllenkwinkel 310 her, der dann im Fahrzeug 304 durch Einwirkung auf die aktive Lenkung 107 realisiert wird. Der Sollversatz 308, d.h. der am Ende der Bewegung anzustrebende Querversatz 202 ist in den meisten praktischen Fällen gleich Null, in Sonderfällen können davon abweichende Werte zweckmäßig sein. Die Messvorrichtung 306 führt Abstands- und/oder Winkelmessungen zwischen dem Fahrzeug 304 und einer Zielposition 307 durch, die so gestaltet sind, dass daraus Orts- und Orientierungsdaten 313 des Fahrzeugs 304 hergeleitet werden können, und leitet diese her. Das Messwertefilter 305 verarbeitet die Orts- und Orientierungsdaten 313 und leitet daraus die Werte für den aktuellen Querversatz 311 und die aktuelle Orientierung 312 des Fahrzeugs 304 her.

Für die von der Messvorrichtung 306 zwischen dem Fahrzeug 304 und der Zielposition 307 durchzuführenden Messungen 315 wirken Sensoren und detektierbare Markierungen zusammen, die auf unterschiedliche Weise angeordnet sein können. Beispielsweise können wie in dem in Fig. 1 gezeigten Anwendungsfall die Sensoren 103 fest am Fahrzeug 101, 304 und die Markierungen 105 fest in bekanntem Abstand zur Zielposition 104 angeordnet sein. Vorteilhaft hierbei ist, dass die Sensorsignale bereits im Fahrzeug 101, 304 vorliegen und nicht erst noch dorthin übertragen werden müssen.

Die umgekehrte Anordnung, d.h. Sensoren fest in bekanntem Abstand zur Zielposition und Markierungen fest am Fahrzeug 304 ist alternativ verwendbar. Vorteilhaft hierbei wäre, dass die Messungen der Sensoren direkt in einem Koordinatensystem relativ zur Zielposition erstellt würden und folglich nicht noch umgerechnet werden müssten.

Die Anzahl der Sensoren und der Markierungen sowie die Art der durchzuführenden Messungen, zum Beispiel Winkelmessung oder Abstandsmessung, richten sich nach den bekannten Prinzipien der Triangulation. Eine mögliche Konfiguration umfasst zwei beabstandete Sensoren am Fahrzeug und zwei beabstandete Markierungen fest in bekanntem Abstand zur Zielposition. Für jede einzelne Markierung reichen dann je eine Abstands- oder Winkelmessung von jedem der Sensoren aus, um den Ort der Markierung relativ zum Ort der Sensoren zu bestimmen. Aus den Orten der beiden Markierungen lässt sich dann zusätzlich die relative Orientierung zwischen Fahrzeug und Zielposition herleiten.

Die relativ zu einem ersten Koordinatensystem bestimmten Orts- und Orientierungswerte lassen sich mit bekannten Gleichungen in jedes andere verschobene und/oder gedrehte Koordinatensystem umrechnen.

Zur Verringerung von Messungenauigkeiten oder zur Erhöhung der Systemverfügbarkeit kann es zweckmäßig sein, darüber hinaus weitere zusätzliche Sensoren und/oder weitere zusätzliche Markierungen zu verwenden.

Fig. 4 zeigt ein Blockdiagramm zur Erläuterung eines zweiten Querlenkverfahrens 400 und einer zweiten Querlenkvorrichtung 417 gemäß der Erfindung. Am Querlenkverfahren 400 beteiligt sind eine Sollversatzvorgabe 401, ein Querversatzregler 402, ein auf ein Fahrzeug 404 einwirkender Orientierungsregler 403, eine Messvorrichtung 406, und ein Messwertefilter 405. Der Querversatzregler 402 und der Orientierungsregler 403 bilden zusammen einen Kaskadenregler 416.

Der Querversatzregler 402 erhält als Eingangsgröße den von der Sollversatzvorgabe 401 gelieferten Soll-Querversatz oder Sollversatz 408 abzüglich des vom Messwertefilter 405 gelieferten aktuellen Querversatzes 411, woraus der Querversatzregler 402 eine Sollorientierung 409 herleitet. Der Orientierungsregler 403 erhält als Eingangsgröße die Sollorientierung 409 abzüglich der vom Messwertefilter 405 gelieferten aktuellen Orientierung 412, woraus der Orientierungsregler 403 einen Solllenkwinkel 410 herleitet, der dann im Fahrzeug 404 durch Einwirkung auf die aktive Lenkung 107 realisiert wird.

Für den Sollversatz 408, die Messvorrichtung 406, die Orts- und Orientierungsdaten 413 und das Messwertefilter 405 , sowie für die Sensoren und Markierungen gilt sinngemäß das oben zum ersten Querlenkverfahren 300 Gesagte.

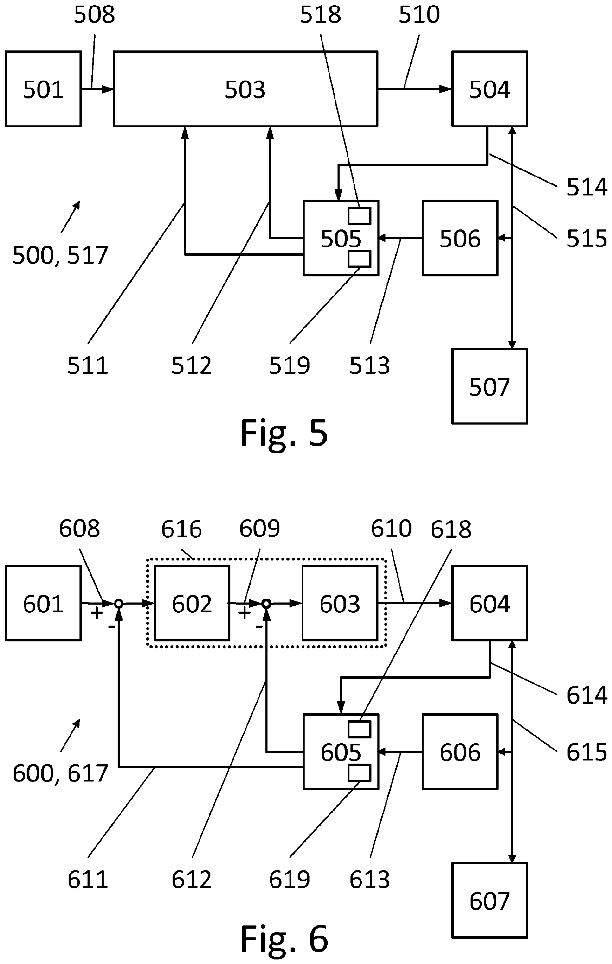

Fig. 5 zeigt ein Blockdiagramm zur Erläuterung eines dritten Querlenkverfahrens 500 und einer dritten Querlenkvorrichtung 517 gemäß der Erfindung. Am Querlenkverfahren 500 beteiligt sind eine Sollversatzvorgabe 501, ein auf ein Fahrzeug 504 einwirkender Regler 503, eine Messvorrichtung 506, und ein Messwertefilter 505. Für die Sollversatzvorgabe 501, den Regler 503, den Solllenkwinkel 510 und die Messvorrichtung 506 gilt sinngemäß das oben zum ersten Querlenkverfahren 300 Gesagte. Das Messwertefilter 505 ist hier ein Kalmanfilter, das nicht nur die Orts- und Orientierungsdaten 513 von der Messvorrichtung 506, sondern zusätzlich eine gemessene Geschwindigkeit und einen gemessenen Lenkwinkel als Fahrteigenschaften 514 vom Fahrzeug 504 erhält, und daraus sowie aus einem Bewegungsmodell 518 des Fahrzeugs 504 den aktuellen Querversatz 511 und die aktuelle Orientierung 512 herleitet.

Fig. 6 zeigt ein Blockdiagramm zur Erläuterung eines vierten Querlenkverfahrens 600 und einer vierten Querlenkvorrichtung 617 gemäß der Erfindung. Am Querlenkverfahren 600 beteiligt sind eine Sollversatzvorgabe 601, ein Querversatzregler 602, ein auf ein Fahrzeug 604 einwirkender Orientierungsregler 603, eine Messvorrichtung 606, und ein Messwertefilter 605. Für den Querversatzregler 602 und den Orientierungsregler 603 gilt sinngemäß das oben zum zweiten Querlenkverfahren 400 Gesagte, für das Messwertefilter 605 in Form eines Kalmanfilters gilt sinngemäß das oben zum dritten Querlenkverfahren 500 Gesagte. Der Querversatzregler 602 und der Orientierungsregler 603 bilden zusammen einen Kaskadenregler 616.

Eine zusätzliche Einflussgröße bei allen Querlenkverfahren 300, 400, 500, 600 ist die Längssteuerung, d.h. die Einwirkung auf Antriebsstrang und Bremssystem des Fahrzeugs. Diese bewirkt den Verlauf der Fahrzeuggeschwindigkeit über der Zeit und kann vollkommen unabhängig vorgegeben werden, zum Beispiel automatisch, teilautomatisch, manuell per Fernsteuerung von einem abgesessenen Fahrzeugführer oder manuell von einem im Fahrzeug befindlichen Fahrzeugführer. Die Wirkung der Längssteuerung schlägt sich zum einen in den über der Zeit sich ändernden Ortsmesswerten nieder, zum anderen aber auch in den eine gemessene Geschwindigkeit umfassenden Fahrteigenschaften 514, 614, und geht auf diese Weise in die Querlenkverfahren ein.

Die für die Messung 306, 406, 506, 606 verwendeten Sensoren 103 des Fahrzeugs 101, 207, 304, 404, 504, 604 können zum Beispiel ein Laserscanner, ein LIDAR oder eine Standbildkamera, oder eine Videokamera sein.

### Bezugszeichenliste (Bestandteil der Beschreibung):

- 101: Sattelschlepper
- 102: Sattelplatte
- 103: Sensoren
- 104: Sattelzapfen
- 105: Reflektoren
- 106: Auflieger
- 107: aktive Lenkung
- 108: Messung
- 109: Stützen

- 201: x-Richtung
- 202: Querversatz
- 203: Orientierungswinkel alpha
- 204: Lenkwinkel beta
- 205: Sattelzapfen = Koordinatenursprung
- 206: Hinterachse
- 207: Sattelschlepper
- 208: Auflieger
- 209: Referenzpunkt
- 210: Vorderachse
- 211: y-Richtung
- 212: Längsachse des Sattelschleppers

- 300: Querlenkverfahren
- 301: Sollversatzvorgabe
- 303: Regelung
- 304: Fahrzeug
- 305: Messwertefilter
- 306: Messvorrichtung
- 307: Zielposition
- 308: Sollversatz
- 310: Solllenkwinkel
- 311: aktueller Querversatz
- 312: aktuelle Orientierung
- 313: Orts- und Orientierungsdaten
- 315: Messung
- 317: Querlenkvorrichtung

- 400: Querlenkverfahren
- 401: Sollversatzvorgabe
- 402: Querversatzregler
- 403: Orientierungsregler
- 404: Fahrzeug
- 405: Messwertefilter
- 406: Messvorrichtung
- 407: Zielposition
- 408: Sollversatz
- 409: Sollorientierung
- 410: Solllenkwinkel
- 411: aktueller Querversatz
- 412: aktuelle Orientierung
- 413: Orts- und Orientierungsdaten
- 415: Messung
- 416: Kaskadenregler
- 417: Querlenkvorrichtung

- 500: Querlenkverfahren
- 501: Sollversatzvorgabe
- 503: Regelung
- 504: Fahrzeug
- 505: Kalmanfilter als Messwertefilter
- 506: Messvorrichtung
- 507: Zielposition
- 508: Sollversatz
- 510: Solllenkwinkel
- 511: aktueller Querversatz
- 512: aktuelle Orientierung
- 513: Orts- und Orientierungsdaten
- 514: Fahrteigenschaften
- 515: Messung
- 517: Querlenkvorrichtung
- 518: Bewegungsmodell
- 519: Gütewerte
- 600: Querlenkverfahren
- 601: Sollversatzvorgabe
- 602: Querversatzregler
- 603: Orientierungsregler
- 604: Fahrzeug
- 605: Kalmanfilter als Messwertefilter
- 606: Messvorrichtung
- 607: Zielposition
- 608: Sollversatz
- 609: Sollorientierung
- 610: Solllenkwinkel
- 611: aktueller Querversatz
- 612: aktuelle Orientierung
- 613: Orts- und Orientierungsdaten
- 614: Fahrteigenschaften
- 615: Messung
- 616: Kaskadenregler
- 617: Querlenkvorrichtung
- 618: Bewegungsmodell
- 619: Gütewerte

## Patentansprüche

1. Ein Querlenkverfahren (300, 400, 500, 600) für das Bewegen eines eine aktive Lenkung (107) umfassenden Fahrzeugs (101, 207, 304, 404, 504, 604) in eine Zielposition (104, 205, 307, 407, 507, 607), umfassend:
- Durchführen von eine Herleitung von Orts- und Orientierungsdaten ermöglichenden Abstands- und/oder Winkelmessungen (108, 315, 415, 515, 615) zwischen dem Fahrzeug (101, 207, 304, 404, 504, 604) und der Zielposition (104, 205, 307, 407, 507, 607),
- Herleiten der Orts- und Orientierungsdaten (313, 413, 513, 613),
- Filtern (306,406, 506, 606) der Orts- und Orientierungsdaten (313, 413, 513, 613) zu Aktuellwerten (311, 312, 411, 412, 511, 512, 611, 612), welche aktuelle Ortswerte (311, 411, 511, 611) und aktuelle Orientierungswerte (312, 412, 512, 612) umfassen,
- Durchführen einer Regelung (303, 402, 403, 503, 602, 603), die aus den Aktuellwerten (311, 312, 411, 412, 511, 512, 611, 612) Solllenkwinkel (310, 410, 510, 610) herleitet, und
- Realisierung des Solllenkwinkels (310, 410, 510, 610) durch Einwirkung auf die aktive Lenkung (107) des Fahrzeugs (101, 207, 304, 404, 504, 604), **dadurch gekennzeichnet, dass**
- die Regelung (303, 402, 403, 503, 602, 603) eine Kaskadenregelung (416, 616) umfasst, bei der in einem äußeren Regelkreis (402, 602) aus den aktuellen Ortswerten (411, 611) eine Sollorientierung (409, 609) hergeleitet wird, und in einem inneren Regelkreis (403, 603) aus der Sollorientierung (409, 609) und dem aktuellen Orientierungswert (412, 612) der Solllenkwinkel (410, 610) hergeleitet wird, wobei
- die Sollorientierung (409, 609) proportional zur Differenz aus einem Sollversatz (408, 608) minus einem aus den aktuellen Ortswerten (411, 611) hergeleiteten aktuellen Querversatz hergeleitet wird, und
- der Solllenkwinkel (410, 610) proportional zur Differenz aus der Sollorientierung (409, 609) minus dem aktuellen Orientierungswert (412, 612) hergeleitet wird.

2. Das Querlenkverfahren (500, 600) gemäß Anspruch 1,
**dadurch gekennzeichnet, dass**
- das Filtern (305, 405, 505, 605) der Orts- und Orientierungsdaten (313, 413, 513, 613) eine Kalmanfilterung (505, 605) umfasst, bei der die Orts- und Orientierungsdaten (513, 613) unter Berücksichtigung von am Fahrzeug (101, 207, 304, 404, 504, 604) gemessenen Fahrteigenschaften (514, 614), Gütewerten (519, 619) und einem Bewegungsmodell (518, 618) des Fahrzeugs (101, 207, 304, 404, 504, 604) zu den Aktuellwerten (511, 512, 611, 612) aufbereitet werden.

3. Eine Querlenkvorrichtung (317, 417, 517, 617) für das Bewegen eines eine aktive Lenkung (107) umfassenden Fahrzeugs (101, 207, 304, 404, 504, 604) in eine Zielposition (104, 205, 307, 407, 507, 607), umfassend:
- Sensoren (103) und Markierungen (105), die so beschaffen und auf das Fahrzeug (101, 207, 304, 404, 504, 604) und die Zielposition (104, 205, 307, 407, 507, 607) verteilt sind, dass aus Abstands- und/oder Winkelmessungen (108, 315, 415, 515, 615) zwischen dem Fahrzeug (101, 207, 304, 404, 504, 604) und der Zielposition (104, 205, 307, 407, 507, 607) Orts- und Orientierungsdaten (313, 413, 513, 613) hergeleitet werden können,
- eine Messvorrichtung (306, 406, 506, 606), die so eingerichtet ist, dass sie mittels der Sensoren (103) und Markierungen (105) die Abstands- und/oder Winkelmessungen (315, 415, 515, 615) zwischen dem Fahrzeug (101, 207, 304, 404, 504, 604) und der Zielposition (104, 205, 307, 407, 507, 607) durchführt, und daraus Orts- und Orientierungsdaten (313, 413, 513, 613) des Fahrzeugs (101, 207, 304, 404, 504, 604) herleitet,
- ein Messwertefilter (305, 405, 505, 605), das so eingerichtet ist, dass es aus den Orts- und Orientierungsdaten (313, 413, 513, 613) Aktuellwerte (311, 312, 411, 412, 511, 512, 611, 612) herleitet, welche aktuelle Ortswerte (311, 411, 511, 611) und aktuelle Orientierungswerte (312, 412, 512, 612) umfassen,
- einen Regler (303, 402, 403, 503, 602, 603), der so eingerichtet ist, dass aus den Aktuellwerten (311, 312, 411, 412, 511, 512, 611, 612) Solllenkwinkel (310, 410, 510, 610) hergeleitet und durch Einwirkung auf die aktive Lenkung (107) realisiert werden, **dadurch gekennzeichnet, dass**
der Regler (303, 402, 403, 503, 602, 603) als Kaskadenregler (416, 616) mit einem Querversatzregler (402, 602) eingerichtet um aus den aktuellen Ortswerten (411, 611) eine Sollorientierung (409, 609) herzuleiten, und einem Orientierungsregler (403, 603) eingerichtet um aus der Sollorientierung (409, 609) und dem aktuellen Orientierungswert (412, 612) den Solllenkwinkel (410, 610) herzuleiten, ausgebildet ist, wobei der Querversatzregler (402, 602) eingerichtet ist, die Sollorientierung (409, 609) proportional zur Differenz aus einem Sollversatz (408, 608) minus einem aus den aktuellen Ortswerten (411, 611) hergeleiteten aktuellen Querversatz herzuleiten, und
der Orientierungsregler (403, 603) eingerichtet ist, den Solllenkwinkel (410, 610) proportional zur Differenz aus der Sollorientierung (409, 609) minus dem aktuellen Orientierungswert (412, 612) herzuleiten.

4. Die Querlenkvorrichtung (517, 617) gemäß Anspruch 3,
**dadurch gekennzeichnet, dass**
- das Messwertefilter (305, 405, 505, 605) als Kalmanfilter (505, 605) ausgebildet ist, so eingerichtet, dass die Orts- und Orientierungsdaten (513, 613) unter Berücksichtigung von am Fahrzeug (101, 207, 304, 404, 504, 604) gemessenen Fahrteigenschaften (514, 614), Gütewerten (519, 619) und einem Bewegungsmodell (518, 618) des Fahrzeugs (101, 207, 304, 404, 504, 604) zu den Aktuellwerten (511, 512, 611, 612) aufbereitet werden.

5. Ein Fahrzeug (101, 207, 304, 404, 504, 604), insbesondere angetriebenes Zugfahrzeug (101, 207), mit einer aktiven Lenkung (107), **dadurch gekennzeichnet, dass** es eingerichtet ist, ein Querlenkverfahren (300, 400, 500, 600) nach einem der Ansprüche 1 bis 2 durchzuführen, und/oder dass es eine Querlenkvorrichtung (317, 417, 517, 617) nach einem der Ansprüche 3 bis 4 aufweist.

## Claims

1. A transverse steering method (300,400, 500, 600) for the movement of a vehicle (101, 207, 304, 404, 504, 604) comprising an active steering (107) to a target position (104, 205, 307, 407, 507, 607), comprising:
- carrying out a deriving of distance and/or angle measurements (108, 315, 415, 515, 615) facilitating location and/or orientation data between the vehicle (101, 207, 304, 404, 504, 604) and the target position (104, 205, 307, 407, 507, 607),
- deriving the location and/or orientation data (313, 413, 513, 613),
- filtering (306, 406, 506, 606) the location and/or orientation data (313, 413, 513, 613) to current values (311, 312, 411, 412, 511, 512, 611, 612), which comprise current location values (311, 411, 511, 611) and current orientation values (312, 412, 512, 612),
- carrying out a control (303, 402, 403, 503, 602, 603), which derives the target steering angle (310, 410, 510, 610) from the current values (311, 312, 411, 412, 511, 512, 611, 612), and
- realization of the target steering angle (310, 410, 510, 610) by acting on the active steering (107) of the vehicle (101, 207, 304, 404, 504, 604), **characterized in that**
- the control (303, 402, 403, 503, 602, 603) comprises a cascade control (416, 616), in which in an outer control circuit (402, 602) a target orientation (409, 609) is derived from the current location values (411, 611), and in an inner control circuit (403, 603) the target steering angle (410, 610) is derived from the target orientation (409, 609) and the current orientation value (412, 612), wherein
- the target orientation (409, 609) is derived proportionally to the difference from the target offset (408, 608) minus a transverse offset derived from the current location values (411, 611), and
- the target steering angle (410, 610) is derived proportionally to the difference from the target orientation (409, 609) minus the current orientation value (412, 612).

2. The transverse steering method (500, 600) according to claim 1,
**characterized in that**
- the filtering (305, 405, 505, 605) of the location and/or orientation data (313, 413, 513, 613) comprises a Kalman filtering (505, 605), in which the location and/or orientation data (513, 613) are processed to the current values (511, 512, 611, 612) considering driving properties (514, 614) measured at the vehicle (101, 207, 304, 404, 504, 604), quality values (519, 619) and a movement model (518, 618) of the vehicle (101, 207, 304, 404, 504, 604).

3. A transverse steering device (317, 417, 517, 617) for the movement of a vehicle (101, 207, 304, 404, 504, 604) comprising an active steering (107) to a target position (104, 205, 307, 407, 507, 607), comprising:
- sensors (103) and markings (105) which are designed and distributed to the vehicle (101, 207, 304, 404, 504, 604) and the target position (104, 205, 307, 407, 507, 607) such that location and/or orientation data (313, 413, 513, 613) can be derived from distance and/or angle measurements (108, 315, 415, 515, 615) between the vehicle (101, 207, 304, 404, 504, 604) and the target position (104, 205, 307, 407, 507, 607),
- a measuring device (306, 406, 506, 606) that is set up to carry out the distance and/or angle measurements (315, 415, 515, 615) between the vehicle (101, 207, 304, 404, 504, 604) and the target position (104, 205, 307, 407, 507, 607) by means of the sensors (103) and markings (105), and derive location and/or orientation data (313, 413, 513, 613) of the vehicle (101, 207, 304, 404, 504, 604) therefrom,
- a measured value filter (305, 405, 505, 605) that is set up to derive current values (311, 312, 411, 412, 511, 512, 611, 612) from the location and/or orientation data (313, 413, 513, 613), which current values comprise location values (311, 411, 511, 611) and current orientation values (312, 412, 512, 612),
- a controller (303, 402, 403, 503, 602, 603), which is set up to derive target steering angles (310, 410, 510, 610) from the current values (311, 312, 411, 412, 511, 512, 611, 612) and realized by acting on the active steering (107), **characterized in that**
the controller (303, 402, 403, 503, 602, 603) is embodied as a cascade controller (416, 616) having a transverse offset controller (402, 602) set up to derive a target orientation (409, 609) from the current location values (411, 611), and an orientation controller (403, 603) set up to derive the target steering angle (410, 610) from the target orientation (409, 609) and the current orientation value (412, 612), wherein the transverse offset controller (402, 602) is set up to derive the target orientation (409, 609) proportionally to the difference of a target offset (408, 608) minus a current transverse offset derived from the current location values (411, 611), and
the orientation controller (403, 603) is set up to derive the target steering angle (410, 610) proportionally to the difference of the target orientation (409, 609) minus the current orientation value (412, 612).

4. The transverse steering device (517, 617) according to claim 3,
**characterized in that**
- the measured value filter (305, 405, 505, 605) is embodied as a Kalman filter (505, 605), set up to process the location and/or orientation data (513, 613) to the current values (511, 512, 611, 612) considering driving properties (514, 614) measured at the vehicle (101, 207, 304, 404, 504, 604), quality values (519, 619) and a movement model (518, 618) of the vehicle (101, 207, 304, 404, 504, 604).

5. A vehicle (101, 207, 304, 404, 504, 604), in particular a driven towing vehicle (101, 207), having an active steering (107), **characterized in that** it is set up to carry out a transverse steering method (300, 400, 500, 600) according to any of claims 1 to 2, and/or that it has a transverse steering device (317, 417, 517, 617) according to any of claims 3 to 4.

## Revendications

1. Procédé de direction transversale (300, 400, 500, 600) pour le mouvement d'un véhicule (101, 207, 304, 404, 504, 604) comprenant une direction active (107) dans une position cible (104, 205, 307, 407, 507, 607), comprenant :
- la mise en œuvre de mesures de distance et/ou d'angle (108, 315, 415, 515, 615) permettant une déduction de données de lieu et d'orientation entre le véhicule (101, 207, 304, 404, 504, 604) et la position cible (104, 205, 307, 407, 507, 607),
- la déduction des données de lieu et d'orientation (313, 413, 513, 613),
- le filtrage (306, 406, 506, 606) des données de lieu et d'orientation (313, 413, 513, 613) en valeurs réelles (311, 312, 411, 412, 511, 512, 611, 612), lesquelles comprennent des valeurs de lieu réelles (311, 411, 511, 611) et des valeurs d'orientation réelles (312, 412, 512, 612),
- la mise en œuvre d'une régulation (303, 402, 403, 503, 602, 603), qui déduit des valeurs réelles (311, 312, 411, 412, 511, 512, 611, 612) des angles de braquage de consigne (310, 410, 510, 610), et
- la réalisation de l'angle de braquage de consigne (310, 410, 510, 610) par action sur la direction active (107) du véhicule (101, 207, 304, 404, 504, 604), **caractérisé en ce que**
- la régulation (303, 402, 403, 503, 602, 603) comprend une régulation en cascade (416, 616), pour laquelle dans un circuit de régulation extérieur (402, 602) une orientation de consigne (409, 609) est déduite des valeurs de lieu réelles (411, 611), et dans un circuit de régulation intérieur (403, 603) l'angle de braquage de consigne (410, 610) est déduit de l'orientation de consigne (409, 609) et de la valeur d'orientation réelle (412, 612), dans lequel
- l'orientation de consigne (409, 609) est déduite de manière proportionnelle à la différence d'un décalage de consigne (408, 608) moins un décalage transversal réel déduit des valeurs de lieu réelles (411, 611), et
- l'angle de braquage de consigne (410, 610) est déduit de manière proportionnelle à la différence de l'orientation de consigne (409, 609) moins la valeur d'orientation réelle (412, 612) .

2. Procédé de direction transversale (500, 600) selon la revendication 1,
**caractérisé en ce que**
- le filtrage (305, 405, 505, 605) des données de lieu et d'orientation (313, 413, 513, 613) comprend un filtrage de Kalman (505, 605), pour lequel les données de lieu et d'orientation (513, 613) sont traitées en valeurs réelles (511, 512, 611, 612) avec prise en compte de propriétés de trajet (514, 614) mesurées sur le véhicule (101, 207, 304, 404, 504, 604), de valeurs de qualité (519, 619) et d'un modèle de mouvement (518, 618) du véhicule (101, 207, 304, 404, 504, 604).

3. Dispositif de direction transversale (317, 417, 517, 617) pour le mouvement d'un véhicule (101, 207, 304, 404, 504, 604) comprenant une direction active (107) dans une position cible (104, 205, 307, 407, 507, 607), comprenant :
- des capteurs (103) et marquages (105), qui sont de nature telle et répartis sur le véhicule (101, 207, 304, 404, 504, 604) et la position cible (104, 205, 307, 407, 507, 607) que des données de lieu et d'orientation (313, 413, 513, 613) peuvent être déduites des mesures de distance et/ou d'angle (108, 315, 415, 515, 615) entre le véhicule (101, 207, 304, 404, 504, 604) et la position cible (104, 205, 307, 407, 507, 607),
- un dispositif de mesure (306, 406, 506, 606), qui est conçu de sorte qu'il met en œuvre au moyen des capteurs (103) et marquages (105) les mesures de distance et/ou d'angle (315, 415, 515, 615) entre le véhicule (101, 207, 304, 404, 504, 604) et la position cible (104, 205, 307, 407, 507, 607), et en déduit des données de lieu et d'orientation (313, 413, 513, 613) du véhicule (101, 207, 304, 404, 504, 604),
- un filtre de valeurs de mesure (305, 405, 505, 605), qui est conçu de sorte qu'il déduit des données de lieu et d'orientation (313, 413, 513, 613) des valeurs réelles (311, 312, 411, 412, 511, 512, 611, 612), lesquelles comprennent des valeurs de lieu réelles (311, 411, 511, 611) et valeurs d'orientation réelles (312, 412, 512, 612),
- un régulateur (303, 402, 403, 503, 602, 603), qui est conçu de sorte que des angles de braquage de consigne (310, 410, 510, 610) sont déduits des valeurs réelles (311, 312, 411, 412, 511, 512, 611, 612) et réalisés par action sur la direction active (107), **caractérisé en ce que**
le régulateur (303, 402, 403, 503, 602, 603) est réalisé sous la forme d'un régulateur en cascade (416, 616) avec un régulateur de décalage transversal (402, 602) conçu pour déduire une orientation de consigne (409, 609) des valeurs de lieu réelles (411, 611), et un régulateur d'orientation (403, 603) conçu pour déduire l'angle de braquage de consigne (410, 610) de l'orientation de consigne (409, 609) et de la valeur d'orientation réelle (412, 612), dans lequel
le régulateur de décalage transversal (402, 602) est conçu pour déduire l'orientation de consigne (409, 609) de manière proportionnelle à la différence d'un décalage de consigne (408, 608) moins un décalage transversal réel déduit des valeurs de lieu réelles (411, 611), et
le régulateur d'orientation (403, 603) est conçu pour déduire l'angle de braquage de consigne (410, 610) de manière proportionnelle à la différence de l'orientation de consigne (409, 609) moins la valeur d'orientation réelle (412, 612).

4. Dispositif de direction transversale (517, 617) selon la revendication 3,
**caractérisé en ce que**
- le filtre de valeurs de mesure (305, 405, 505, 605) est réalisé sous la forme d'un filtre de Kalman (505, 605), conçu de sorte que les données de lieu et d'orientation (513, 613) sont traitées en valeurs réelles (511, 512, 611, 612) avec prise en compte de propriétés de trajet (514, 614) mesurées sur le véhicule (101, 207, 304, 404, 504, 604), de valeurs de qualité (519, 619) et d'un modèle de mouvement (518, 618) du véhicule (101, 207, 304, 404, 504, 604).

5. Véhicule (101, 207, 304, 404, 504, 604), en particulier véhicule tracteur (101, 207) entraîné, avec une direction active (107), **caractérisé en ce qu'**il est conçu pour mettre en œuvre un procédé de direction transversale (300, 400, 500, 600) selon l'une quelconque des revendications 1 à 2, et/ou qu'il présente un dispositif de direction transversale (317, 417, 517, 617) selon l'une quelconque des revendications 3 à 4.
